# EUROPEAN PATENT APPLICATION

(11) **EP 3 026 522 A1**
(43) Date of publication of application: **01.06.2016**
(21) Application number: 14195024.6
(22) Date of filing: 26.11.2014
(51) Int. Cl.: G06F 1/16, G06Q 20/32

(54) **User interface**

(71) Applicant: Nokia Technologies OY, 02610 Espoo (FI)
(72) Inventor: Eronen, Antti, 33820 Tampere (FI); Leppänen, Jussi, 33580 Tampere (FI); Lehtiniemi, Arto, 33720 Tampere (FI); Vilermo, Miikka, 33720 Tampere (FI)
(74) Representative: Swindell & Pearson Limited

(57) **Abstract**

A method, computer program and apparatus are provided. The method comprises: determining a transaction to be performed, at least in part, by an apparatus; detecting a change in orientation of the apparatus; and adjusting a property of the transaction based on the detected change in orientation of the apparatus.

## Description

### TECHNOLOGICAL FIELD

Embodiments of the present invention relate to a user interface. For example, they relate to a user interface for performing at least part of a transaction.

### BACKGROUND

A mobile computing device may comprise a near-field communication (NFC) transceiver and a secure element for performing a financial transaction. The secure element may store financial credentials (such as credit card details) for use in performing a financial transaction.

When the mobile computing device is brought close to a contactless point of sale (POS) terminal, the secure element communicates with the POS terminal using the device's NFC transceiver to perform a financial transaction (for example, to make a purchase).

### BRIEF SUMMARY

According to various, but not necessarily all, embodiments of the invention there is provided a method, comprising: determining a transaction to be performed, at least in part, by an apparatus; detecting a change in orientation of the apparatus; and adjusting a property of the transaction based on the detected change in orientation of the apparatus.

According to various, but not necessarily all, embodiments of the invention there is provided computer program code that, when performed by at least one processor, causes at least the following to be performed: determining a transaction to be performed, at least in part, by an apparatus; detecting a change in orientation of the apparatus; and adjusting a property of the transaction based on the detected change in orientation of the apparatus.

The computer program code may form all of part of the code in one or more computer programs. The one or more computer programs may be stored by a non-transitory computer readable medium.

According to various, but not necessarily all, embodiments of the invention there is provided an apparatus, comprising: means for determining a transaction to be performed, at least in part, by the apparatus; means for detecting a change in orientation of the apparatus; and means for adjusting a property of the transaction based on the detected change in orientation of the apparatus.

According to various, but not necessarily all, embodiments of the invention there is provided an apparatus, comprising: at least one processor; memory storing computer program code that is configured, working with the at least one processor, to cause the apparatus to perform at least the following: determining a transaction to be performed, at least in part, by the apparatus; detecting a change in orientation of the apparatus; and varying a property of the transaction based on the detected change in orientation of the apparatus.

### BRIEF DESCRIPTION

For a better understanding of various examples described in the detailed description, reference will now be made by way of example only to the accompanying drawings in which:
Figure 1 illustrates an apparatus in the form of a chip/chipset;
Figure 2 illustrates an apparatus in the form of a mobile computing device;
Figure 3 illustrates a flow chart of a method;
Figure 4A illustrates the apparatus of figure 2 at a POS terminal;
Figure 4B illustrates the apparatus of figure 2 being rotated relative to the POS terminal;
Figure 5A illustrates the apparatus of figure 2 being positioned at a further apparatus;
Figure 5B illustrates the apparatus of figure 2 after it has been rotated relative to the further apparatus; and
Figure 5C illustrates the apparatus of figure 2 after it has been further rotated relative to the further apparatus.

### DETAILED DESCRIPTION

Embodiments of the invention relate to a user interface for performing at least part of a transaction. For example, embodiments of the invention may provide a more efficient user interface for adjusting a property of a transaction based on a detected change in orientation of an apparatus.

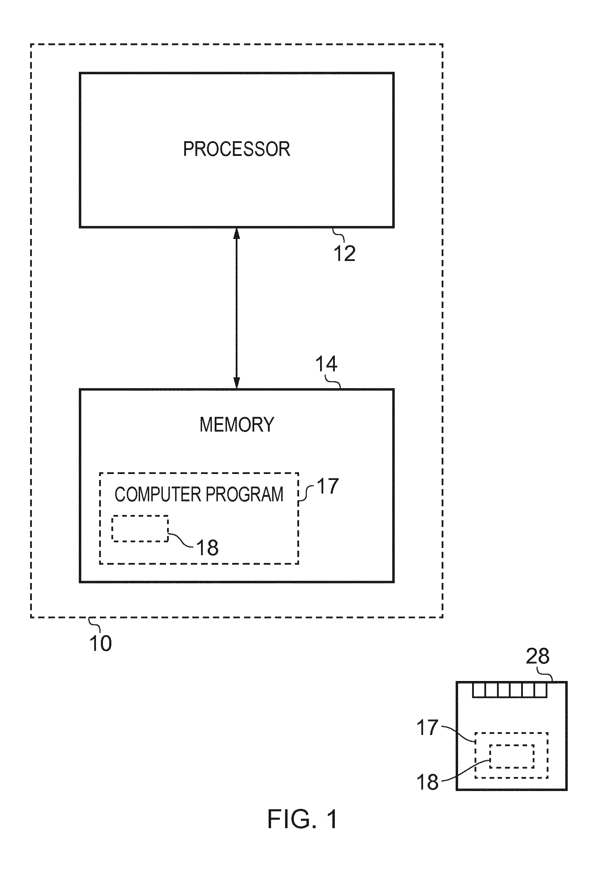

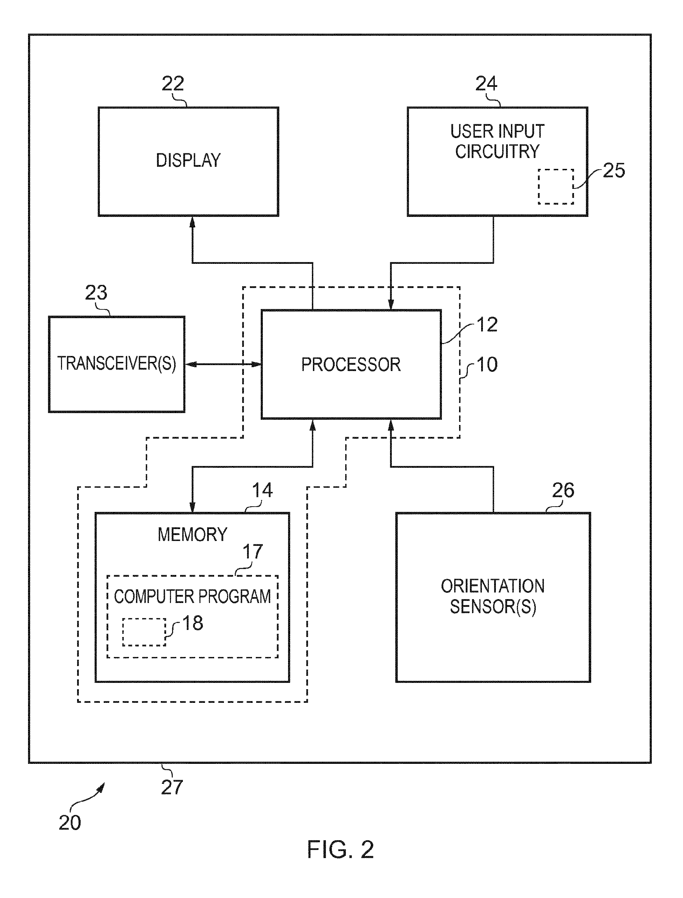

Figure 1 illustrates an apparatus 10 that may be a chip or a chipset. The apparatus 10 may form part of a computing device such as that illustrated in figure 2.

The apparatus 10 comprises at least one processor 12 and at least one memory 14. The at least one processor 12 may comprise a secure element that might, for instance, be configured to store (encrypted) financial credentials such as credit and/or debit card details. A single processor 12 and a single memory 14 are shown in figure 1 and discussed below merely for illustrative purposes.

The processor 12 is configured to read from and write to the memory 14. The processor 12 may comprise an output interface via which data and/or commands are output by the processer 12 and an input interface via which data and/or commands are input to the processor 12.

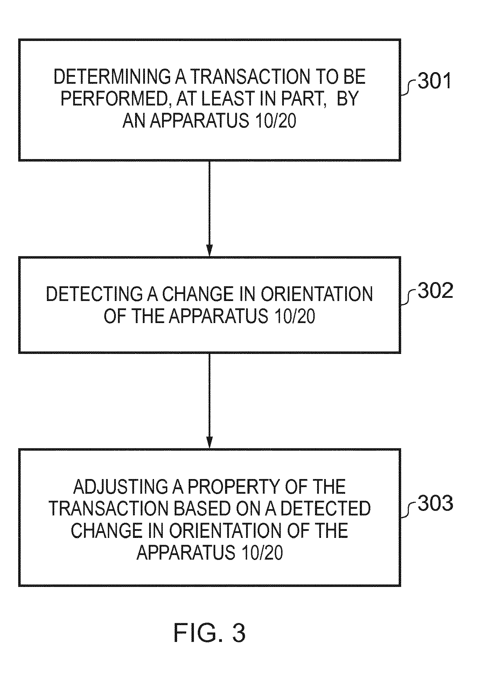

The memory 14 is illustrated as storing a computer program 17 which comprises the computer program instructions/code 18 that control the operation of the apparatus 10 when loaded into the processor 12. The processor 12, by reading the memory 14, is able to load and execute the computer program code 18. The computer program code 18 provides the logic and routines that enable the apparatus 10 to perform the methods illustrated in figure 3 and described below. In this regard, the processor 12, the memory 14 and the computer program code 18 provide a means for performing the methods illustrated in figure 3 and described below.

Although the memory 14 is illustrated as a single component in figure 1, it may be implemented as one or more separate components, some or all of which may be integrated/removable and/or may provide permanent/semi-permanent dynamic/cached storage.

The computer program code 18 may arrive at the apparatus 10 via any suitable delivery mechanism 28. The delivery mechanism 28 may be, for example, a non-transitory computer-readable storage medium such as an optical disc or a memory card. The delivery mechanism 28 may be a signal configured to reliably transfer the computer program code 18. The apparatus 10 may cause the propagation or transmission of the computer program code 18 as a computer data signal.

Figure 2 illustrates another apparatus 20 in the form of a computing device. The apparatus 20 may, for example, be a mobile computing device such as a mobile telephone, a tablet computer, a games console or a personal music player.

In the example illustrated in figure 2, the apparatus 20 comprises an electronic display 22, one or more transceivers 23, user input circuitry 24, one or more orientation sensors 26 and the apparatus 10 illustrated in figure 1 co-located in a housing/body 27.

The elements 12, 14, 22, 23, 24, 25 and 26 are operationally coupled and any number or combination of intervening elements can exist between them (including no intervening elements).

The processor 12 is configured to control the display 22 to display information. The display 22 may be any type of display. It may, for example, be a liquid crystal display (LCD), an organic light emitting diode (OLED) display or a quantum dot display.

The processor 12 is configured to receive and process inputs from the user input circuitry 24. In some examples, some or all of the user input circuitry may be combined with the display 22 in the form of a touch-sensitive display. Such a touch-sensitive display may operate using any type of touch sensing technology including, for example, capacitive, resistive, infrared, dispersive signal and/or acoustic pulse technology. Alternatively or additionally, the user input circuitry 24 may comprise one or more keys which are separate from the display 22. The keys may be any type of keys, including mechanical keys and capacitive keys.

The user input circuitry 24 may comprise biometric authentication circuitry 25. The biometric authentication circuitry 25 is configured to authenticate a user based on one or more biometrics. The biometric authentication circuitry 25 may operate using any type of biometrics. It may, for example, comprise a fingerprint scanner, a face scanner and/or an iris scanner.

The processor 12 is configured to receive inputs from and provide inputs to the one or more transceivers 23. The one or more transceivers 25 may be configured to transmit and receive wireless signals. The one or more transceivers may, for example, include: an NFC transceiver, a Bluetooth transceiver, a Wi-Fi transceiver and/or one or more cellular transceivers.

The processor 12 is configured to receive and process inputs from the one or more orientation sensors 26. The one or more orientation sensors 26 are configured to sense the orientation of the apparatus 20 and to sense any changes in the orientation of the apparatus 20. In some examples, the one or more orientation sensors may be one or more motion sensors that might be configured to detect motion in six degrees of freedom along and about three orthogonal axes. The six degrees of freedom may be: forward translational movement, backward translational movement, upwards translational movement, downwards translational movement, leftwards translational movement, rightwards translational movement, and rotational movement in the form of pitch, yaw and roll. The one or more orientation sensors 26 may, for example, include one or more accelerometers, one or more gyroscopes and/or one or more magnetometers.

A first example of a method according to embodiments of the invention will now be described in relation to figure 3.

In the first example of the method, a user is able to adjust a property of a transaction by changing the orientation of the apparatus 10/20. This may, for example, enable the user to adjust the total monetary value of a transaction in order to add a tip. In the first example, at block 301 in figure 3, the processor 12 determines a transaction to be performed, at least in part, by the apparatus 10/20. The transaction may be a financial transaction, such as a purchase, that is performed with a POS terminal. The processor 12 may determine that a transaction is to be performed after receiving inputs from one or more of the transceivers 23, such as an NFC transceiver.

At block 302 in figure 3, a user changes the orientation of the apparatus 10/20. The change in orientation is detected by the processor 12 when it receives inputs from the one or more orientation sensors 26.

At block 303 in figure 3, the processor 12 adjusts a property of the transaction based on the detected change in the orientation of the apparatus 10/20. For example, as mentioned above, the processor 12 may adjust the total monetary value of the transaction based on the detected change in orientation. This may, for instance, enable the user to add a tip on to the original monetary value of the transaction.

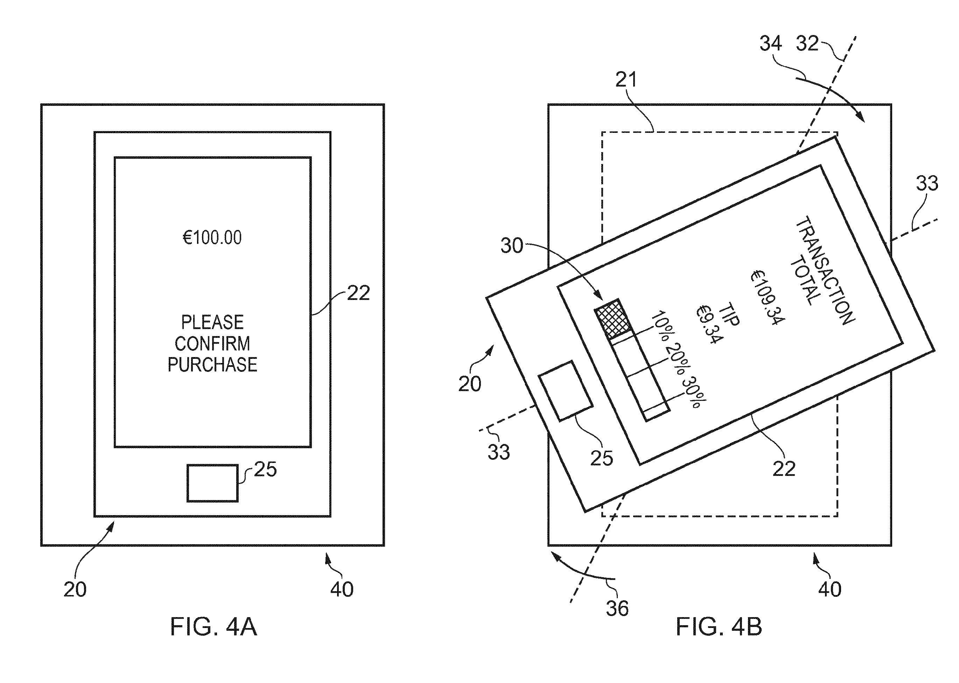

A second example of the method according to embodiments of the invention will now be disclosed in relation to figures 3, 4A and 4B.

In the implementation of the second example of the method described below, a single transceiver 23 is used in the form of an NFC transceiver. However, in other implementations a different type of transceiver may be used and, in some cases, multiple transceivers of different types may be used in carrying out the method.

At block 301 in figure 3, in the second example of the method, the processor 12 determines a transaction to be performed, at least in part, by the apparatus 10/20. This may be done in a number of different ways. For example, a user may bring the apparatus 20 to a position at which it is proximate a contactless POS terminal and able to enable a wireless communication link with the contactless POS terminal using its NFC transceiver 23. The NFC transceiver 23 of the apparatus 20 provides inputs to the processor 12 indicating that it has sensed a POS terminal and the processor 12 determines from those inputs that a transaction is to be performed by the apparatus 20.

In other implementations, the transaction may be determined in different ways. For instance, the apparatus 20 may comprise a camera for use in scanning a barcode or quick response (QR) code. The barcode or QR code may direct the apparatus 20 to a particular website/server for performing a transaction, for example, over the internet.

Figure 4A illustrates the apparatus 20 when it is in a position proximate a POS terminal 40. In this example, figure 4A, user input has been provided to the POS terminal 40 (for instance, by a sales assistant) indicating that the monetary value of the transaction to be performed is €100. The transaction may, for instance, relate to the purchase of goods or services.

The POS terminal 40 transmits information to the apparatus 20 over the wireless communication link indicating that the value of the transaction is €100. After this information has been received, optionally, the processor 12 of the apparatus 20 may control the display 22 to instruct the user to authorize the transaction at this point. If so, the user may provide one or more inputs at the user input circuitry 24 in order to authorize the transaction. In some implementations, the user may merely enter a personal identification number (PIN) via the user input circuitry 24.

In the illustrated implementation, the user input circuitry 24 comprises biometric authentication circuitry 25 in the form of a fingerprint scanner. The user may therefore authorize the transaction by placing a digit on the fingerprint scanner 25. When the user does so, the processor 12 processes the input provided by the fingerprint scanner 25 and controls the NFC transceiver 23 to transmit information to the POS terminal 40 over the wireless communication link to authorize the transaction.

The POS terminal 40 may then acknowledge the authorization of the transaction. In response, the processor 12 of the apparatus 20 may control the display 22 to inform the user that he may now adjust a property of the transaction. In this example, the property that may be adjusted is the total monetary value of transaction. This enables the user to add a tip if he wishes.

In some instances, the user may not wish to add a tip and he may indicate this by providing appropriate inputs via the user input circuitry 24. If such inputs are provided, the processor 12 of the apparatus may control the NFC transceiver 23 to transmit information to the POS terminal 40 over the wireless communication link indicating that the total value of the transaction is not to be adjusted and that the transaction should now be completed.

In other instances, the user may wish to adjust the total monetary value of the transaction to add a tip. In such instances, in order to do so, the user changes the orientation of the apparatus 20 while it is positioned proximate the POS terminal 40, as illustrated in figure 4B. In the implementation illustrated in figure 4B, the apparatus 20 has been rotated at the POS terminal 40 in a clockwise direction as indicated by the arrows 34 and 36. In block 302 in figure 3, the processor 12 detects the change in orientation of the apparatus 20 caused by this rotation. A dotted line 21 in figure 4B indicates the position of the apparatus 20 before it was rotated by the user.

At block 303 in figure 3, the processor 12 varies a property of the transaction, in the form of the total monetary value of the transaction, based on the detected change in orientation of the apparatus 20.

In some implementations, the processor 12 does not begin to adjust the property of the transaction until it has determined that the detected change in orientation exceeds a threshold value. For instance, at some point during the transaction process prior to providing the user with the ability to adjust the monetary value of the transaction (to add a tip), the processor 12 may determine the orientation (for instance, the yaw, pitch and/or roll) of the apparatus 20 in space as a reference orientation.

In some implementations, the reference orientation may be the orientation of the apparatus 20 when the original monetary value of the transaction was authorized by the user, as described above. The processor 12 may measure the detected change in orientation from the reference orientation.

The processor 12 may use the reference orientation to set one or more threshold values (such as a threshold yaw value, a threshold pitch value and/or a threshold roll value) where, if a change in orientation of the apparatus 20 exceeds the one or more threshold values, the processor 12 begins to vary a property/monetary value of transaction. This may help to prevent/mitigate unintentional adjustment of the property/monetary value of the transaction.

In the example illustrated in figure 4B, the dotted line 32 illustrates a threshold yaw value and, when a virtual axis 33 passing through the apparatus 20 is rotated beyond the threshold yaw value 32, the processor 12 begins to adjust the property/monetary value of the transaction.

While the dotted lines 21 and 32 are merely shown in figure 4B for illustrative purposes, in some implementations, some guidance/marking may be provided at the POS terminal indicating where to position the apparatus 20 to initiate a transaction and indicating how to change the orientation of the apparatus 20 in order to adjust the property/monetary value of the transaction.

In some implementations, the property/monetary value of the transaction is varied gradually, over a period of time, while the detected change in orientation continues to exceed the threshold value (and irrespective of the actual position of the apparatus 20 beyond the threshold value). For instance, if the user holds the apparatus 20 in a position which is beyond the threshold value 32, the monetary value of the transaction may continue to increase gradually unless the apparatus 20 is moved such that the change in orientation no longer exceeds the threshold value. The amount by which the property/monetary value of the transaction is adjusted may depend upon a length of a time period over which the detected change in orientation exceeds the threshold value. The user may change the orientation of the apparatus 20 such that the threshold value is no longer exceeded, in order to cease adjustment of the property/monetary value of the transaction. In this implementation, the user adjusts the yaw of the apparatus 20 by rotating the apparatus 20 in an anti-clockwise direction (opposite to the direction indicated by the arrows 34 and 36) in figure 4B to cease adjustment of the property/monetary value.

The processor 12 may control the display 22 to provide a visual indication of the property/monetary value of the transaction being adjusted over time. In the implementation illustrated in figure 4B, the processor 12 controls the display 22 to display a progress bar 30 indicating the percentage value that has been added to the original monetary value of the transaction in the form of a tip.

Once the property/monetary value of the transaction has been adjusted, the processor 12 may cause the display 22 to prompt the user to provide input via the user input circuitry 24 to confirm the adjusted property/monetary value of the transaction. In some implementations, the user may merely enter a PIN via the user input circuitry 24. Alternatively or additionally, the processor 12 may cause the display 22 to prompt the user to authorize the adjusted transaction by providing an input via the biometric authentication circuitry 25. If such an input is provided, the processor 12 responds by controlling the one or more transceivers 23 to transmit information to the POS terminal over the wireless communication link confirming the transaction.

Thus, depending upon the implementation, the user may be required to authorize the transaction: i) before adjusting the property/monetary value, ii) after adjusting the property/monetary value, or iii) before and after adjusting the property/monetary value.

In some alternative implementations, rather than the property/monetary value of the transaction being adjusted irrespective of the actual position of the apparatus 20 beyond the threshold value, an amount by which the property is varied depends upon a magnitude of the detected change in orientation of the apparatus 20. For instance, the transaction/monetary value may be gradually adjusted synchronously with a gradual change in orientation of the apparatus 20. In such implementations, after the change in orientation has exceeded the threshold value, the property/monetary value of the transaction gradually changes with gradual rotation of the apparatus 20 at the POS terminal 40. If the user ceases to rotate the apparatus 20 at the POS terminal 40, the processor 12 detects this and ceases to adjust the property/monetary value of the transaction. If the user recommences rotation of the apparatus 20 in the same (clockwise) direction, adjustment of the property/monetary value of the transaction recommences until the user again ceases to rotate the apparatus 20. Rotation of the apparatus 2 in the opposite (anti-clockwise) direction may cause the processor 12 to reduce the monetary value of the transaction by reducing the value of the tip that has been added. When the total value of the transaction has reached an amount that the user is happy with, he may provide inputs via the user input circuitry 24 and/or the biometric authentication circuitry 25 (as described above in relation to other implementations) to authorize the transaction.

In some instances, the processor 12 may prevent the property/monetary value of the transaction from being adjusted by more than a maximum value. The maximum value may be determined based upon the value of the property before the property is adjusted (such as the original monetary value of the transaction as input into the POS terminal 40 by the sales assistant). For instance, the maximum value of the property/monetary value may be set at 120% or 130% of the original value.

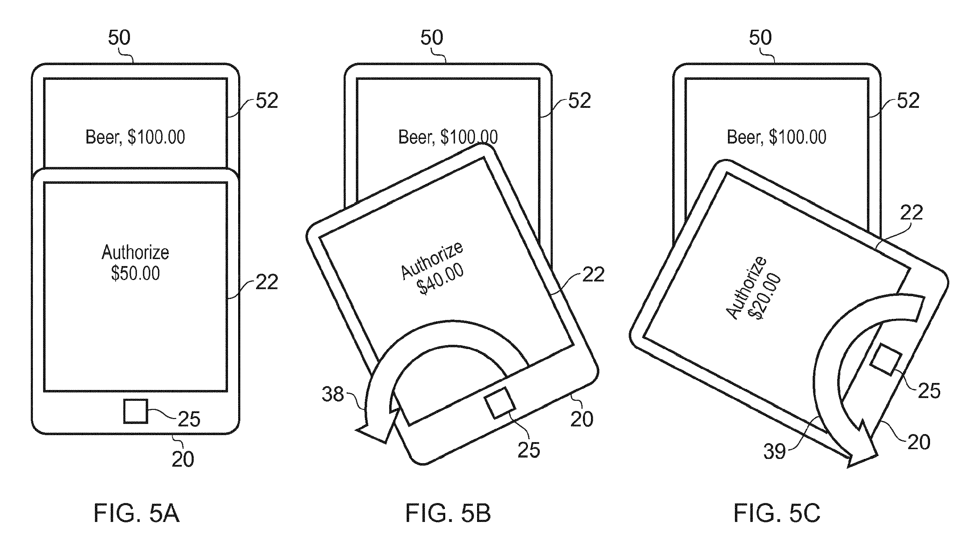

Figures 5A to 5C illustrate a third example of the method according to embodiments of the invention. In this implementation of the third example, a (first) user of the apparatus 20 preauthorizes a transaction to be performed by a (second) user of a second apparatus 50 in which payment will be shared between the first and second users.

In the instance illustrated in figure 5A, the first and second users are to buy beer for a value up to $100. In figure 5A, the display 52 of the second apparatus 50 illustrates the goods and services to be purchased (beer) and the maximum value of the transaction ($100).

The first user (of the first apparatus 20) places the first apparatus 20 in a position that is proximate to the second apparatus 50. At block 301 in figure 3, the processor 12 of the first apparatus 20 determines that a transaction is to be performed, at least in part, by the apparatus 20. In this example, the transaction is a future transaction for a future purchase (in this instance, the future purchase of beer).

When the first apparatus 20 is positioned proximate to the second apparatus 50, a wireless communication link is established between the first and second apparatuses 20, 50 in a similar way to that described above in relation to the apparatus 20 and the POS terminal 40. The processor 12 of the first apparatus 20 determines from information received over the wireless communication link from the second apparatus 50 that a transaction is to be performed in future.

The first user may then change the orientation of the first apparatus 20 in order to vary the amount that he is willing to contribute towards the future joint transaction/purchase. In this example, if the first user rotates the first apparatus 20 in an anti-clockwise direction, the amount that the user contributes towards the future joint transaction/purchase is reduced, whereas if the first user rotates the first apparatus in a clockwise direction, the amount that the user contributes to the future joint transaction/purchase is increased.

In block 302 in figure 3, the processor 12 detects a change in orientation of the apparatus 20. The processor 12 determines that the first apparatus 20 has been rotated in an anti-clockwise direction as indicated by the arrow 38 in figure 5B. At block 303 in figure 3, the processor 12 varies a property of the transaction (which, in this example, is the amount that he contributes to the future transaction/purchase), based on the detected change in orientation of the apparatus 20. It can be seen in figure 5B that the processor 12 has reduced the first user's contribution from $50 to $40.

In some implementations, the processor 12 might not adjust the property of the transaction until the change in orientation of the first apparatus 20 has exceeded a threshold value, in the same manner as that described above in relation to the second example illustrated in figures 4A and 4B.

Figure 5C illustrates an instance where the first user has continued to rotate the first apparatus 20 in an anti-clockwise direction, as indicated by the arrow 39 in figure 5C. This change in orientation is detected by the processor 12 using inputs provided by the one or more orientation sensors 26. This causes the processor 12 to further reduce the amount that the first user will contribute to the future transaction/purchase. It can be seen in figure 5C that the amount that the first user will contribute to the future transaction/purchase has been reduced to $20.

When the first user is happy with the contribution that he is to make to the future transaction/purchase, the user may provide input via the user input circuitry 24 and/or the biometric authentication circuitry 25 to preauthorize the future transaction/purchase.

If the value of the transaction, when it is actually performed, turns out to be less than the total value which was indicated on the second apparatus 50 ($100), it may be that the first user contributes a percentage toward the purchase that corresponds with the percentage of the total value of the joint purchase that was preauthorized. In the example illustrated in figure 5C, the first user would contribute 20 percent towards the purchase of beer up to a maximum value of $20.

In other implementations of the third example of the method, the first user of the first apparatus 20 might not be preauthorizing a future transaction to be made by the second user of the second apparatus 50 at a later point in time. Instead, the second apparatus 50 may be currently positioned at a POS terminal 40 in figure 5A in order to make an imminent transaction/purchase. The second apparatus 50 may effectively be sandwiched between the first apparatus 20 and the POS terminal 40. In these implementations, the processor 12 of the first apparatus 20 may adjust the first user's contribution to the transaction/purchase based upon the change in orientation of the apparatus 20 described above, while the second apparatus 50 is positioned proximate the POS terminal 40.

Embodiments of an invention have been described above which enable a user to adjust a property/monetary value of a transaction, for instance, to add a tip. The property/monetary value is altered by changing an orientation of an apparatus. This provides a particularly intuitive and user friendly manner to alter the transaction and therefore provides a particularly efficient user interface.

References to 'computer-readable storage medium', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the figure 3 may represent steps in a method and/or sections of code in the computer program 17. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For instance, in the implementations described above in relation to figures 4A to 5C, the processor 12 adjusts a property of a transaction based upon a change in the yaw of the apparatus 20. In other implementations the processor 12 may, for instance, adjust the property based upon a change in the pitch or roll of the apparatus 20.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A method, comprising:
determining a transaction to be performed, at least in part, by an apparatus;
detecting a change in orientation of the apparatus; and
adjusting a property of the transaction based on the detected change in orientation of the apparatus.

2. The method as claimed in claim 1, wherein the property is adjusted after detecting that the detected change in orientation exceeds a threshold value.

3. The method as claimed in claim 2, further comprising:
ceasing to adjust the property of the transaction in response to detecting that the change in orientation no longer exceeds the threshold value.

4. The method as claimed in claim 2 or 3, wherein the property is adjusted gradually, over a period of time, while the detected change in orientation continues to exceed a threshold value.

5. The method as claimed in claim 4, wherein an amount by which the property is adjusted depends, at least in part, upon a length of a time period over which the detected change in orientation exceeds the threshold value.

6. The method as claimed in claim 1, wherein an amount by which the property is adjusted depends upon a magnitude of the detected change in orientation of the apparatus.

7. The method as claimed in claim 6, wherein the transaction is gradually adjusted synchronously with a gradual change in orientation of the apparatus.

8. The method as claimed in any of the preceding claims, further comprising:
preventing the property of the transaction from being adjusted by more than a maximum value.

9. The method as claimed in claim 8, wherein the maximum value is determined based upon the value of the property before the property is adjusted.

10. The method as claimed in any of the preceding claims, further comprising:
authorizing the transaction, at least in part, when the apparatus is in a first orientation prior to detecting the change in orientation of the apparatus, wherein the detected change in orientation is measured from the first orientation.

11. The method as claimed in any of the preceding claims, further comprising:
authorizing the transaction, at least in part, after the property of the transaction has been adjusted.

12. The method as claimed in any of the preceding claims, wherein the property of the transaction is a monetary value of the transaction.

13. The method as claimed in claim 12, wherein the transaction is varied to add a tip.

14. Computer program code that, when performed by at least one processor, causes the method as claimed in any of the preceding claims to be performed.

15. The apparatus comprising means for performing a method as claimed in one or more of claims 1 to 13.
